# FASCICULE DE BREVET EUROPEEN

(11) **EP 3 309 628 B1**
(45) Date de publication et mention de la délivrance du brevet: **05.02.2020**
(21) Numéro de dépôt: 16193192.8
(22) Date de dépôt: 11.10.2016
(51) Int. Cl.: G04C 3/10, G04G 17/04, H01M 2/10, G04C 10/00, G04G 17/06

(54) **MONTRE COMPORTANT UN DISPOSITIF DE BRIDAGE MAGNÉTIQUE**
ARMBANDUHR, DIE MIT EINER MAGNETISCHEN SPANNVORRICHTUNG AUSGESTATTET IST
WATCH COMPRISING A MAGNETIC CLAMPING DEVICE

(43) Date de publication de la demande: 18.04.2018
(73) Titulaire: ETA SA Manufacture Horlogère Suisse, 2540 Grenchen (CH)
(72) Inventeur: LAGORGETTE, Pascal, 2502 Bienne (CH)
(74) Mandataire: Ravenel, Thierry Gérard Louis

(56) Documents cités:
- JP-A- 2000 030 810
- US-A1- 2012 051 193
- US-A1- 2012 206 088

## Description

### DOMAINE DE L'INVENTION

La présente invention se rapporte au domaine de l'horlogerie. Elle concerne une montre qui comporte un module électronique alimenté par une pile bouton.

### ARRIERE-PLAN DE L'INVENTION

La plupart des montres électroniques comprennent des mouvements qui sont alimentés par des piles dites « boutons » qui ont une durée de vie limitée et qu'il convient donc de remplacer régulièrement. Les piles sont en général disposées dans un logement cylindrique ménagé dans la platine de la montre. Des brides métalliques sont conçues pour exercer une pression importante sur les faces de la pile afin de réaliser un contact électrique permanent et de maintenir la pile en position. Les brides sont obtenues par estampage et pliage et leur géométrie est spécifiquement adaptée à celle de la pile et au mouvement avec lesquels elles sont destinées à coopérer. Ce dispositif de bridage présente cependant certains inconvénients. Il n'est généralement pas possible d'utiliser des piles de taille différentes avec une même bride si bien que les piles de remplacement doivent être en tous points identiques à la pile d'origine. Des outillages d'estampage onéreux doivent être développés pour chaque application nouvelle. Les brides sont relativement fragiles et leur petite dimension rend leur maniement délicat. Elles peuvent être déformées ou rompues accidentellement par l'utilisateur lors du remplacement de la pile, ce qui provoquera des pertes de contact et occasionnera un disfonctionnement partiel ou total de la montre. On trouvera des exemples de réalisation de telles brides métalliques dans le document CH508909 ou le document FR2460499.

On connaît également du document US2012/0051193 une montre comportant une boite en deux parties reliées l'une à l'autre par des aimants.

La présente invention a pour but de remédier aux inconvénients précités de l'art antérieur en proposant une montre munie d'un mouvement électronique ou un module électronique comportant un nouveau type de dispositif de bridage pour sa source d'énergie formée par une pile notamment une pile du type bouton.

### RESUME DE L'INVENTION

A cet effet, l'invention concerne une montre selon la revendication indépendante 1.

Une telle construction présente comme avantages de faciliter et de sécuriser les changements de pile et d'être compatible avec des piles de taille différente.

### BREVE DESCRIPTION DES FIGURES

D'autres caractéristiques et avantages de l'invention apparaîtront à la lecture de la description d'exemples de réalisation, donnés à titre illustratif et non limitatif, en référence aux dessins annexés dans lesquels :
- la figure 1 représente une vue en perspective du dessous d'un mouvement d'une montre selon l'invention,
- les figures 2 à 4 représentent des vues en coupe de plusieurs variantes d'exécution d'une montre selon l'invention.

### DESCRIPTION DETAILLEE

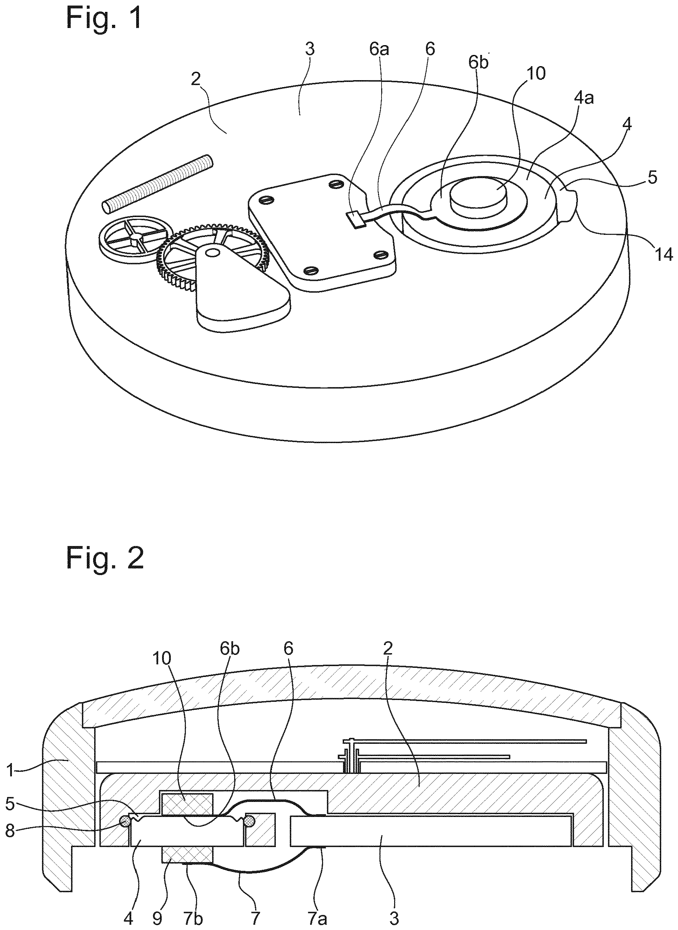

Un mouvement électronique ou un module électronique d'une montre est représenté à la figure 1 sur laquelle on distingue une platine 2 dans laquelle est ménagée une creusure 5, de forme cylindrique, accueillant une pile de type bouton 4 destinée à alimenter un module électronique 3, classiquement un circuit imprimé. Une encoche 14 permet de de faciliter l'extraction de la pile de son logement. Un conducteur électrique 6 prenant la forme d'un câble plat flexible, est destiné à relier électriquement le module électronique 3 à un pôle de la pile 4. Une première extrémité 6a du conducteur 6 est reliée au module électronique 3, typiquement à l'aide d'un connecteur ou d'une soudure. Une deuxième extrémité 6b du conducteur 6 présente une surface conductrice apparente venant au contact d'une paroi 4a de la pile 4. La connexion au deuxième pôle de la pile 4 n'est pas représentée. Un dispositif de bridage prenant la forme d'un aimant 10 est positionné sur l'extrémité 6b du conducteur, en vis-à-vis de la paroi 4a de la pile 4 réalisée dans un matériau ferromagnétique. La force d'aimantation entre l'aimant 10 et la paroi 4a permet de plaquer et de maintenir l'extrémité 6b du conducteur 6 contre la paroi 4a de la pile 4.

La figure 2 représente une vue en coupe schématique d'une montre selon l'invention dont seuls apparaissent les détails utiles à la compréhension de l'invention. Cette montre comporte une boîte 1 dont la carrure et la glace sont représentés ainsi qu'un mouvement situé à l'intérieur de la boîte 1. Un module électronique 3 est monté sur une platine 2. Celui-ci est alimenté par une pile bouton 4 situé dans une creusure 5 de la platine. Des conducteurs électriques 6, 7 relient les deux bornes de la pile 4 au module électronique 3.

Selon une forme particulière de l'invention, la pile 4 est maintenue en place dans la creusure 5 à l'aide d'un joint torique 8 placé dans une gorge ménagée dans la paroi de la creusure 5. Il est évident que tout autre moyen de fixation pourrait être utilisé pour réaliser le maintien de la pile, comme par exemple des moyens élastiques déformables.

Selon une première variante d'exécution correspondant à la configuration présentée à la figure 1, une extrémité 6b d'un conducteur 6 est pincé entre un aimant 10 et la pile 4. L'extrémité 6b possède une piste conductrice apparente, de préférence dorée, qui est maintenue au contact de la pile 4 par la pression exercée par l'aimant 10. Le conducteur est un câble plat flexible de type FFC mais pourrait également être un fil ou une bride métallique. Pour faciliter le montage et éliminer le risque d'un mauvais positionnement ou d'un déplacement de l'extrémité 6b du conducteur 6 sous l'aimant 10, l'aimant 10 peut être fixé à l'extrémité 6b par tous moyens tels que la soudure ou le collage.

Selon une deuxième variante d'exécution, une extrémité 7b d'un conducteur électrique 7 est fixée à un aimant 9 qui est lui-même fixé par aimantation sur une face de la pile 4. Dans cette configuration, l'aimant 9 est réalisé dans un matériau conducteur ou est recouvert d'une surface conductrice comme une dorure afin de transmettre le courant électrique de la pile 4 au conducteur 7. La fixation du conducteur sur l'aimant est réalisée par soudage de préférence par un moyen de soudage robotisé de type « pick and place ». Dans le cas où le conducteur 7 ou seulement son extrémité 7b est formé par une bride métallique, l'aimant 9 peut également être serti sur la bride. L'autre extrémité 7a du conducteur 7 est reliée à un module électronique 3 par une soudure ou tout autre moyen d'assemblage permettant la transmission d'un courant électrique.

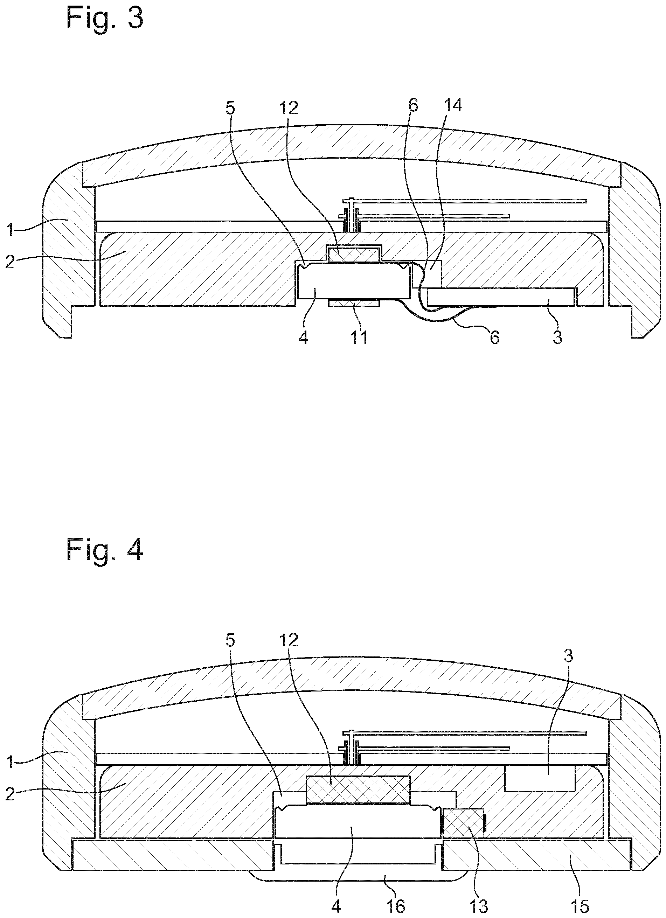

La figure 3 présente d'autres variantes de réalisation de l'invention. Selon une troisième variante, l'aimant 11 est une bande magnétique dont la longueur est au moins cinq fois l'épaisseur. De préférence, la bande magnétique est une bande flexible. La baisse de la pression d'aimantation sur une bande magnétique de faible épaisseur peut être compensée par l'augmentation de la surface aimantée si bien que la force de contact totale peut être équivalente à celle d'un aimant classique. Ce type d'aimant présente l'avantage de pouvoir être décollé progressivement par pelage avec un effort de traction fortement réduit comparé à un aimant rigide de même force d'aimantation. On limite ainsi le risque d'arracher le conducteur 6 lors du décollement de l'aimant. L'utilisation d'une bande magnétique 11, grâce à sa faible épaisseur, permet également de mettre en œuvre l'invention dans les montres les plus plates.

Les différentes solutions présentées jusqu'à présent permettent de réaliser un dispositif de bridage amovible apte à assurer une liaison électrique entre une pile bouton et un conducteur. Selon un autre aspect avantageux de l'invention représenté sur les figures 3 et 4, un aimant 12 est fixé à la platine (2) par tout moyen approprié. Alternativement, l'aimant pourrait être solidaire d'une autre partie fixe de la montre comme la carrure. Un conducteur 6 relie électriquement la pile 4 au module 3 selon l'une des configurations précédemment décrites. Dans cette configuration particulière, le dispositif de bridage, en plus d'assurer une liaison électrique entre la pile 4 et le module électronique 3, maintient la pile bouton 4 en place dans la creusure 5 de la platine 2. La force d'aimantation est suffisante pour assurer la fixation de la pile sans qu'il soit nécessaire d'utiliser un autre moyen de retenu. Le décollement de la pile 4 de l'aimant 12 peut être obtenu en exerçant une pression sur la périphérie de la pile 4 pour la faire basculer ou en introduisant un outil approprié dans l'encoche 14. La mise en place et le retrait de la pile 4 dans la montre se trouve ainsi facilité.

Selon une autre variante d'exécution présentée à la figure 4, un aimant 13 est positionné en vis-à-vis de la face latérale d'une pile 4 qui est électriquement reliée à la face de la pile opposée à celle en vis-à-vis de l'aimant 12. Le positionnement de la pile 4 dans le plan parallèle au mouvement peut être obtenu par un aimant formant un dièdre ou par deux aimants ayant des faces non parallèles. La boîte de la montre comporte aussi un fond 15 comportant une trappe 16. La mise en place de la pile 4 s'effectue après avoir retiré la trappe 16, en déposant simplement la pile 4 dans la creusure 5. Le positionnement définitif de la pile 4 et les connexions électriques sont obtenus automatiquement par l'action des aimants 12 et 13 sans qu'il soit nécessaire de manipuler un quelconque élément à l'intérieur de la montre. Cette configuration permet de simplifier la mise en place et la connexion de la pile, et d'éliminer les risques de détérioration sur le mouvement ou les conducteurs que l'on rencontre dès que l'on ouvre la montre.

Dans les différentes variantes d'exécution présentées, la pile bouton 4 a été positionnée parallèlement au mouvement. Elle pourrait également être positionnée selon une autre orientation, par exemple perpendiculairement au mouvement.

Il est évidemment possible de combiner les différentes variantes d'exécutions présentées ainsi que celle de l'art antérieur pour réaliser un bridage électrique sur chacun des pôles de la pile. En particulier on pourra réaliser un premier bridage sur le fond de la pile à l'aide d'un aimant et un deuxième bridage électrique sur la face latérale de la pile à l'aide d'une lame métallique déformée élastiquement.

De façon avantageuse, le dispositif de bridage magnétique de l'invention permet, grâce à la force d'aimantation constante, de réaliser un contact électrique permanent et d'éliminer le risque de faux contact causé par le relâchement dans le temps des contraintes élastiques dans les brides de l'art antérieur ou par d'éventuelles déformations plastiques suite à une mauvaise manipulation de ces brides lors du remplacement de la pile. Il simplifie et sécurise les opérations de remplacement de la pile dans la montre grâce à une manipulation aisée des contacts aimantés ou en supprimant les opérations manuelles pour connecter la pile.

Les piles boutons sont de forme cylindrique, d'épaisseur et de diamètre variables. Le bridage du conducteur sur la pile se faisant par aimantation sur une surface de la pile il n'est pas tributaire des dimensions de la pile comme c'est le cas pour un bridage mécanique où une force de réaction s'applique sur la face opposée à celle qui reçoit l'action de la bride. De façon avantageuse le dispositif de bridage magnétique de l'invention permet ainsi, au contraire des solutions de l'art antérieur, d'utiliser des piles de diamètre et d'épaisseur différents. La configuration avec un aimant fixe apte à maintenir la pile est particulièrement adaptée pour utiliser des piles de différentes tailles.

Alternativement, un même dispositif de bridage comportant un conducteur et un aimant peut être utilisé dans différentes montres destinées à recevoir des piles de taille différente. On peut ainsi économiser la réalisation d'outillages spécifiques et couteux lors du développement d'une nouvelle montre en réutilisant des bridages existants.

De façon avantageuse les conducteurs utilisés dans l'invention sont souples et isolés électriquement au contraire des brides de l'art antérieur. Il en résulte une simplification dans la conception des mouvements et la disposition des deux conducteurs l'un par rapport à l'autre. Les conducteurs peuvent par exemple être facilement connectés en deux points voisins sur une même face du module électronique et cheminer l'un au contact de l'autre comme c'est le cas dans la figure 3 sans qu'il soit nécessaire de prévoir des isolants supplémentaires. Il est également plus facile de positionner la pile de façon éloignée et indépendante par rapport à la position du module électronique et de la placer en tout point de la montre.

Il est ainsi proposé une montre électronique intégrant un dispositif de bridage électrique polyvalent qui facilite et sécurise les opérations de changement de pile tout en réduisant les coûts de fabrication.

## Revendications

1. Montre comportant une boîte (1) contenant une platine (2) et un module électronique (3) alimenté par une pile (4), un conducteur (6, 7) reliant électriquement la pile (4) au module électronique (3) et un dispositif de bridage apte à assurer une liaison électrique entre la pile (4) et le conducteur (6, 7) **caractérisé en ce que** le dispositif de bridage comporte un aimant (9, 10, 11, 12, 13), ledit aimant assurant la conduction électrique entre la pile et le conducteur (6 ; 7) .

2. Montre selon la revendication précédente **caractérisée en ce que** le conducteur (6, 7) est flexible.

3. Montre selon la revendication précédente **caractérisée en ce que** le conducteur (6, 7) est un câble plat.

4. Montre selon l'une des revendications précédentes **caractérisée en ce que** le conducteur (6, 7) est fixé à l'aimant (9, 10, 11, 12, 13).

5. Montre selon l'une des revendications précédentes **caractérisée en ce que** le conducteur (6, 7) est placé entre l'aimant (9, 10, 11, 12, 13) et la pile (4).

6. Montre selon la revendication 4 **caractérisée en ce que** l'aimant (9, 10, 11, 12, 13) est placé entre le conducteur (6, 7) et la pile (4).

7. Montre selon l'une des revendications précédentes **caractérisée en ce que** l'aimant (9, 10, 11, 12, 13) comporte une surface conductrice.

8. Montre selon la revendication précédente **caractérisée en ce que** l'aimant (9, 10, 11, 12, 13) est réalisé dans un matériau conducteur.

9. Montre selon l'une des revendications 6 ou 7 **caractérisée en ce que** l'aimant (9, 10, 11, 12, 13) est doré.

10. Montre selon l'une des revendications précédentes **caractérisée en ce que** le conducteur (6, 7) est isolé électriquement.

11. Montre selon l'une des revendications précédentes **caractérisée en ce que** l'aimant (9, 10, 11, 12, 13) est une bande magnétique dont la longueur est au moins cinq fois l'épaisseur.

12. Montre selon l'une des revendications précédentes **caractérisée en ce qu'**elle comporte un joint torique (8) agencé pour maintenir la pile.

13. Montre selon la revendication précédente **caractérisée en ce que** l'aimant ((9, 10, 11, 12, 13) du dispositif de bridage est solidaire d'une partie fixe de la montre.

14. Montre selon l'une des revendications précédentes **caractérisée en ce que** l'aimant (12) est fixé à la platine (2).

15. Montre selon l'une des revendications précédentes **caractérisée en ce que** l'aimant (12) est fixé à la carrure.

## Patentansprüche

1. Tragbare Uhr, umfassend ein Gehäuse (1), das eine Platte (2) und ein von einer Batterie (4) gespeistes elektronisches Modul (3) enthält, einen Leiter (6, 7), der die Batterie (4) mit dem elektronischen Modul (3) elektrisch verbindet, und eine Klemmvorrichtung, die geeignet ist, eine elektrische Verbindung zwischen der Batterie (4) und dem Leiter (6, 7) sicherzustellen, **dadurch gekennzeichnet, dass** die Klemmvorrichtung einen Magneten (9, 10, 11, 12, 13) umfasst, wobei der Magnet die elektrische Leitfähigkeit zwischen der Batterie und dem Leiter (6; 7) sicherstellt.

2. Tragbare Uhr nach dem vorhergehenden Anspruch, **dadurch gekennzeichnet, dass** der Leiter (6, 7) flexibel ist.

3. Tragbare Uhr nach dem vorhergehenden Anspruch, **dadurch gekennzeichnet, dass** der Leiter (6, 7) ein Flachkabel ist.

4. Tragbare Uhr nach einem der vorhergehenden Ansprüche, **dadurch gekennzeichnet, dass** der Leiter (6, 7) an dem Magneten (9, 10, 11, 12, 13) befestigt ist.

5. Tragbare Uhr nach einem der vorhergehenden Ansprüche, **dadurch gekennzeichnet, dass** der Leiter (6, 7) zwischen dem Magneten (9, 10, 11, 12, 13) und der Batterie (4) angeordnet ist.

6. Tragbare Uhr nach Anspruch 4, **dadurch gekennzeichnet, dass** der Magnet (9, 10, 11, 12, 13) zwischen dem Leiter (6, 7) und der Batterie (4) angeordnet ist.

7. Tragbare Uhr nach einem der vorhergehenden Ansprüche, **dadurch gekennzeichnet, dass** der Magnet (9, 10, 11, 12, 13) eine leitfähige Oberfläche aufweist.

8. Tragbare Uhr nach dem vorhergehenden Anspruch, **dadurch gekennzeichnet, dass** der Magnet (9, 10, 11, 12, 13) aus einem leitfähigen Material hergestellt ist.

9. Tragbare Uhr nach einem der Ansprüche 6 oder 7, **dadurch gekennzeichnet, dass** der Magnet (9, 10, 11, 12, 13) vergoldet ist.

10. Tragbare Uhr nach einem der vorhergehenden Ansprüche, **dadurch gekennzeichnet, dass** der Leiter (6, 7) elektrisch isoliert ist.

11. Tragbare Uhr nach einem der vorhergehenden Ansprüche, **dadurch gekennzeichnet, dass** der Magnet (9, 10, 11, 12, 13) ein magnetisches Band ist, dessen Länge mindestens gleich seiner fünffachen Dicke ist.

12. Tragbare Uhr nach einem der vorhergehenden Ansprüche, **dadurch gekennzeichnet, dass** sie einen O-Ring (8) aufweist, der zum Halten der Batterie angeordnet ist.

13. Tragbare Uhr nach dem vorhergehenden Anspruch, **dadurch gekennzeichnet, dass** der Magnet (9, 10, 11, 12, 13) der Klemmvorrichtung mit einem festen Teil der tragbaren Uhr fest verbunden ist.

14. Tragbare Uhr nach einem der vorhergehenden Ansprüche, **dadurch gekennzeichnet, dass** der Magnet (12) an der Platte (2) befestigt ist.

15. Tragbare Uhr nach einem der vorhergehenden Ansprüche, **dadurch gekennzeichnet, dass** der Magnet (12) am Gehäusemittelteil befestigt ist.

## Claims

1. Watch comprising a case (1) containing a plate (2) and an electronic module (3) powered by a battery (4), a conductor (6, 7) electrically connecting the battery (4) to the electronic module (3) and a clamping device capable of ensuring an electrical connection between the battery (4) and the conductor (6, 7), **characterized in that** the clamping device includes a magnet (9, 10, 11, 12, 13), said magnet ensuring electrical conduction between the magnet and the conductor (6; 7).

2. Method according to the preceding claim, **characterized in that** the conductor (6, 7) is flexible.

3. Method according to the preceding claim, **characterized in that** the conductor (6, 7) is a flat cable.

4. Watch according to any of the preceding claims, **characterized in that** the conductor (6, 7) is fixed to the magnet (9, 10, 11, 12, 13).

5. Watch according to any of the preceding claims, **characterized in that** the conductor (6, 7) is placed between the magnet (9, 10, 11, 12, 13) and the battery (4).

6. Watch according to claim 4, **characterized in that** the magnet (9, 10, 11, 12, 13) is placed between the conductor (6, 7) and the battery (4).

7. Watch according to any of the preceding claims, **characterized in that** the magnet (9, 10, 11, 12, 13) includes a conductive surface.

8. Watch according to the preceding claim, **characterized in that** the magnet (9, 10, 11, 12, 13) is made of a conductive material.

9. Watch according to any of claims 6 or 7, **characterized in that** the magnet (9, 10, 11, 12, 13) is gold plated.

10. Watch according to any of the preceding claims, **characterized in that** the conductor (6, 7) is electrically insulated.

11. Watch according to any of the preceding claims, **characterized in that** the magnet (9, 10, 11, 12, 13) is a magnetic strip whose length is at least five times its thickness.

12. Watch according to any of the preceding claims, **characterized in that** the watch includes an O-ring joint (8) arranged to hold the battery.

13. Watch according to the preceding claim, **characterized in that** the magnet (9, 10, 11, 12, 13) of the clamping device is integral with a fixed part of the watch.

14. Watch according to any of the preceding claims, **characterized in that** the magnet (12) is fixed to the plate (2).

15. Watch according to any of the preceding claims, **characterized in that** the magnet (12) is fixed to the case middle.
